## Europäisches Patentamt

(19) **European Patent Office**

**Office européen des brevets**

(11) Publication number: **0 257 548**
**B1**

(12) **EUROPEAN PATENT SPECIFICATION**

(45) Date of publication of the patent specification: **07.11.90**

(51) Int. Cl.⁵: **C22B 3/00, C22B 11/00**

(21) Application number: **87112044.0**

(22) Date of filing: **19.08.87**

(54) Process for the recovery of silver from zinc plant calcines and neutral or low acid leach residues with thiourea.

(30) Priority: **26.08.86 CA 516850**

(43) Date of publication of application:
**02.03.88 Bulletin 88/9**

(45) Publication of the grant of the patent:
**07.11.90 Bulletin 90/45**

(84) Designated Contracting States:
**BE DE ES NL**

(56) References cited:
**DE-A- 3 407 049**
**DE-C- 543 304**
**GB-A- 2 077 247**
**US-A- 4 145 212**
**US-A- 4 561 947**

**F. PAWLEK "Metallhüttenkunde", 1983, pages 676-681, Walter de gruyter, Berlin-New York**

(73) Proprietor: **NORANDA INC., P.O. Box 45 Suite 4500 Commerce Court West, Toronto Ontario, M5L 1B6(CA)**

(72) Inventor: **Rosato, Lucia, 2195 Cambridge Street, Mount Royal Quebec H3R 2Y3(CA)**
Inventor: **Ismay, Arnaldo, 134 Windmill, Pointe Claire Quebec H9R 4Y7(CA)**
Inventor: **Blais, Mireille, 17482 Myrand, Pierrefonds Quebec H9J 1G6(CA)**

(74) Representative: **Patentanwälte Müller-Boré, Deufel, Schön, Hertel, Lewald, Otto, Postfach 26 02 47 Isartorplatz 6, D-8000 München 26(DE)**

## Description

This invention relates to a process for the recovery of silver from zinc plant calcines and neutral or low acid leach residues with thiourea.

The roast-leach electrowin (RLE) process accounts for most of today's zinc production. In this process, the zinc sulphide concentrate is roasted and the roasted concentrate or calcine is leached in a series of stages designed for the maximum extraction of zinc. The first stage of the leach process consists of a so-called Neutral Leach, in which the calcine is reacted with recycled spent electrolyte at pH 4-5, to dissolve the zinc oxide. The neutral leach residue is then subjected to a hot or high acid leach (HAL) to dissolve the zinc ferrite fraction of the calcine, and the iron which dissolves with the zinc is subsequently precipitated from solution after a solid/liquid separation as jarosite, goethite or hematite. Alternatively, the neutral leach residue can be treated by the so-called "Conversion Process" which results in the dissolution of zinc ferrite and the simultaneous precipitation of iron as jarosite.

In most plants there is also a so-called Low Acid Leach step between Neutral Leaching and HAL or Conversion, that has the objective of completing the dissolution of zinc oxide from the calcine added in Neutral Leaching, before this residue enters the HAL or Conversion step.

The silver in these processes reports to the HAL residues in those plants using the HAL step, or to the jarosite residue if a plant does not have a HAL step or there is no liquid/solid separation between HAL and jarosite precipitation. Most of the zinc plants which recover silver, employ the HAL process producing a silver enriched residue fraction which needs to be further upgraded by flotation to produce a saleable product. While flotation of zinc plant residues is practiced industrially, flotation conditions and results vary widely from plant to plant and are only economically attractive if there is a lead or copper smelter in the vicinity of the zinc plant.

In Canadian Patent No. 1.090.141 (US 4,145,212), there is disclosed a process for the recovery of silver from high or silver-enriched residues which have been subjected to a HAL and further upgraded by flotation. In the process disclosed in the above patent, the silver flotation concentrate is further treated by leaching with thiourea to solubilize the silver which is subsequently recovered by cementation with aluminum. The main problem with this process is the high consumption of thiourea caused by the presence of sulfides which have been concentrated in the flotation process before thiourea leaching. Furthermore, the above process can not be used in plants which have the conversion process for the treatment of their iron bearing zinc residues.

GB-A 2 077 247 shows recovery of gold and/or silver and/or bismuth contained in a sulfuretted ore and/or sulfoarsenide containing ore by subjecting the ore, after removal of gangue, to reducing roasting, to oxidising roasting, to optional crushing, then to a first lixiviation with sulfuric acid followed by lixiviation with a sulfuric acid thiourea solution and finally after filtration of the solution to cementation of the solution to recover its gold, and/or silver and also, if any, its bismuth content.

Thus, the lixiviant solution includes a reducing agent in addition to thiourea.

It is the object of the present invention to provide a process for the recovery of silver which can be used by all hydrometallurgical zinc plant operations. In the process in accordance with the present invention silver can be leached from zinc calcine or from the residue obtained in the first zinc oxide dissolution stage, which is common to all hydrometallurgical zinc plants. The process can therefore be incorporated into any hydrometallurgical zinc plant regardless of its flowsheet, with a minimum impact on the existing circuit.

The process, in accordance with the present invention, comprises the steps of leaching silver containing zinc calcines or neutral or low acid leach residues at atmospheric pressure with an acidic aqueous sulphate solution containing 0.1–20g/l thiourea without the addition of any organic, reducing or oxidizing reagents at 30–85°C and pH 1–5 to solubilize more than 85% of the silver, and recovering the solubilized silver by adsorption onto activated carbon or an ion-exchange resin, or cementation with iron or zinc dust.

The solubilized silver may be recovered by adding coarse carbon to the leach slurry to adsorb the silver using the conventional carbon-in-pulp or carbon-in-leach process, followed by screening of the silver loaded carbon so as to minimize silver losses resulting from filtrate entrainment into the residue. The solubilized silver may also be recovered by adsorption onto activated carbon or cementation with iron or zinc dust after liquid/solid separation of the leach slurry.

Alternately, it has been found that high silver recoveries can be obtained by leaching the zinc calcines or natural leach residue in the presence of activated carbon which has been initially impregnated from 1-25% by weight with thiourea by reacting the carbon with a solution containing 1-30g/l thiourea for 10 minutes to 2 hours. In this process, the silver is simultaneously leached and adsorbed onto the activated carbon so that no thiourea is directly added into the leach solution reducing the risk of any potential downstream contamination of the filtrates with thiourea.

The invention will now be disclosed, by way of example, with reference to the accompanying drawings in which:

Figure 1 is a flowsheet of a thiourea leach process in accordance with the present invention;

Figure 2 is a flowsheet of the thiourea leach process in accordance with the present invention incorporated into a conventional zinc recovery process flowsheet;

Figure 3 is an alternative thiourea leach process in accordance with the present invention; and

Figure 4 is another alternative thiourea leach process in accordance with the present invention.

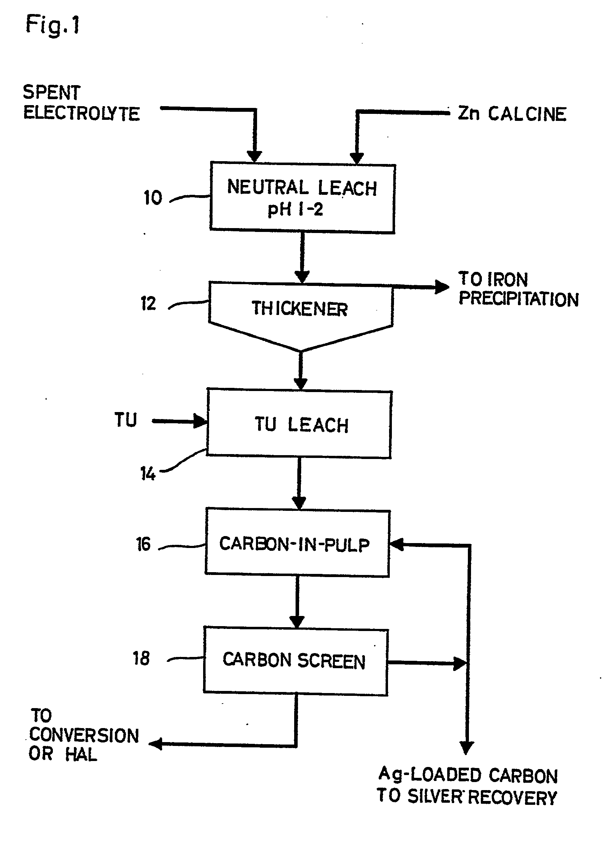

Referring to Figure 1, a roasted zinc concentrate or calcine is leached with spent electrolyte in a so-called neutral leach stage 10 at pH 1-2. The leach slurry is fed to a thickener 12. The thickener filtrate is sent to a conventional iron precipitation stage whereas the silver containing residue is treated with thiourea at a concentration of 0.1-20g/l in a thiourea leach stage 14 at 30-85°C to solubilize more than 85% of the silver contained in the neutral leach residue. The leach slurry is passed through a conventional carbon-in-pulp process stage 16 to adsorb the solubilized silver onto activated carbon. The carbon in pulp slurry is passed through a screen 18 to filter the silver loaded carbon from the residue which is sent to a conventional conversion or HAL stage for the dissolution of the zinc ferrite fraction of the residue. The silver loaded carbon is sent to a conventional silver recovery process. A portion of the silver loaded carbon may be recycled to the carbon-in-pulp process stage 16. Alternatively, the carbon may be added to the leach with the thiourea as a carbon-in-leach process.

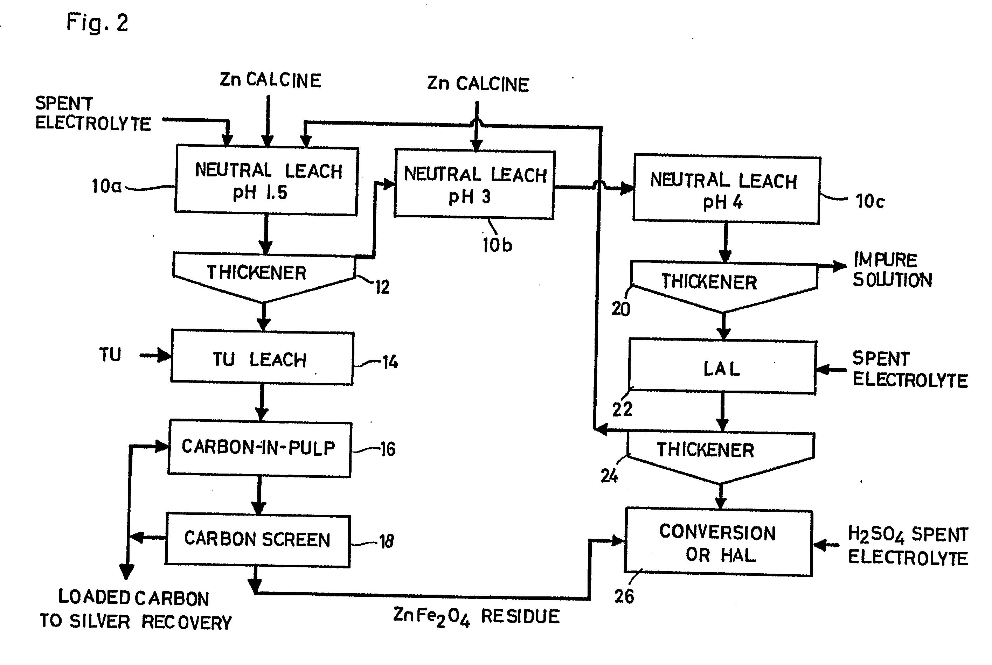

Figure 2 illustrates a flowsheet of a conventional zinc recovery process incorporating the thiourea leach process of Figure 1 wherein the same elements have been identified by the same reference numerals. In the conventional zinc recovery process, the zinc calcine is leached with spent electrolyte in three neutral leach stages 10a, 10b and 10c at pH 1.5, 3 and 4, respectively to dissolve the zinc oxide content of the zinc calcine. The leach slurry is then fed to a thickener 20. The impure solution from the thickener 20 is fed to conventional purification and zinc electrolysis stages whereas the residue is leached with spent electrolyte in a so-called low acid leach (LAL) stage 22, and its slurry is fed to a thickener 24. The liquid solution from the thickener 24 is recycled to neutral leach stage 10a whereas the residue is subjected to a conversion or a HAL step 26 with $H_2SO_4$ and spent electrolyte to dissolve the zinc ferrite fraction of the zinc calcine. The iron which is dissolved with the zinc using a HAL process is subsequently precipitated from solution as jarosite, geothite or hematite. The conversion process results in the dissolution of zinc ferrite and the simultaneous precipitation of iron as jarosite.

The silver recovery process in accordance with the present invention is located after the first neutral leach stage 10a. The liquid solution from thickener 12 is fed to the second neutral leach stage 10b whereas the silver containing residue is treated with thiourea following the same process as disclosed in Figure 1. The ferrite residue from the carbon screen 18 is sent to the conversion or high acid leach stage 26 for zinc ferrite dissolution.

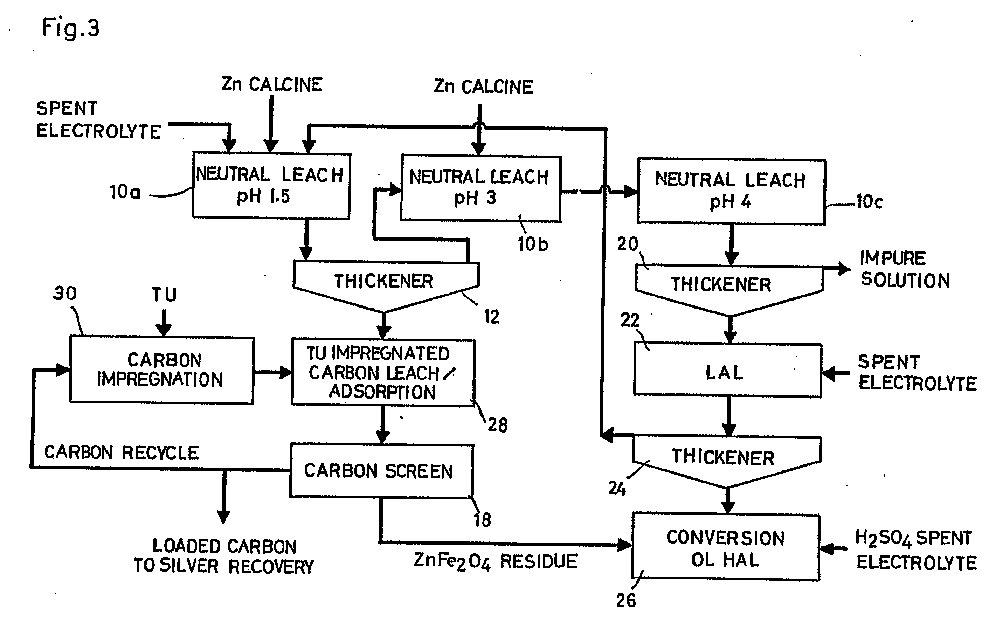

Figure 3 illustrates a flowsheet of a conventional zinc recovery process identical to the one of Figure 2 but incorporating a second alternative of a thiourea leach process wherein the residue from thickener 12 is leached in a leach/adsorption stage 28 in the presence of activated carbon which has been initially impregnated from 1-25% by weight which thiourea in a carbon impregnation stage 30. In this alternative process, the silver is simultaneously leached and adsorbed onto the activated carbon so that no thiourea is directly added into the leach solution reducing the risk of any potential downstream contamination of the filtrates with thiourea.

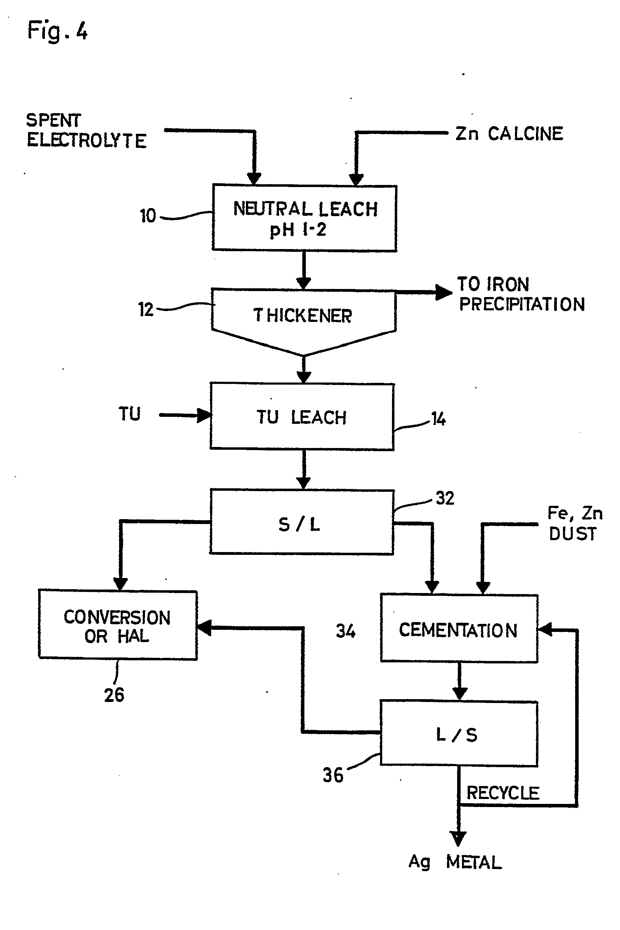

Figure 4 illustrates an alternative flowsheet of the thiourea leach process shown in Figure 1 wherein the same elements have been identified by the same reference numerals. In this flowsheet, the thiourea leach slurry is fed to a solid/liquid separation stage 32. The filtrate is fed to a cementation stage 34 for cementation on iron or zinc dust whereas the residue is fed to a conventional conversion or high acid leach stage. The cementation slurry is fed to another liquid/solid separation stage 36 to recover silver whereas the filtrate is recycled to a conversion or high acid leach stage. Cementation on iron or zinc dust could be replaced by carbon adsorption onto activated carbon or an ion-exchange resin.

From the above description, it will be seen that the thiourea leach process in accordance with the present invention differs from the process disclosed in the above Canadian Patent No. 1,090,141 in that:

a) it can be easily integrated into the neutral leach oxide dissolution stage which is common to all hydrometallurgical zinc plants (neutral leach stage 10a, 10b, 10c in Figures 2 and 3) whereas the process disclosed in the above Canadian Patent is only applicable to the recovery of silver from high or silver-enriched residues which have been generated by subjecting zinc residue to a HAL and further upgraded by flotation. The recovery of silver according to the above Canadian patent is therefore limited to those plants employing a HAL process to treat iron-bearing zinc residues and is not applicable to plants which utilize other processes for treatment of their iron bearing zinc residues, such as the conversion process which is mentioned as an alternative to the HAL leach process in stage 26 of Figures 2 and 3 of the drawings, because the conversion process produces a jarosite residue which cannot be treated with thiourea to extract the silver content thereof.

b) it requires a low thiourea concentration (0.1-20 g/l) because there is a very small amount of sulfides compared with the HAL residue or flotation concentrate.

c) it does not require the addition of organic reagents to dissolve elemental sulfur that collects the silver because there is no sulfur formation in the described process.

d) it allows carbon adsorption from thiourea leach slurry by the carbon-in-pulp and the carbon-in-leach process which minimizes silver losses resulting from filtrate entrainment into the residue.

e) it also allows a one-step simultaneous extraction/adsorption of silver by a thiourea impregnated carbon-in-leach process which reduces the risk of any potential downstream contamination of the filtrates with thiourea.

The invention will now be further illustrated with reference to the following examples:

## Example 1

A 100 g sample of calcine (55.3% Zn, 10.4% Fe, 2.40% Pb, 91g/t Ag) was leached at 20% solids at pH 1.5 with a sulphuric acid solution containing 2 g/L thiourea for 30 min., at 40-70°C. The slurry was filtered and the solids washed with water. At the end of the test, the leached residue weighed 28 g and contained 15 g/t Ag. The filtrate assay was 23 mg/L Ag and when combined with the wash water represents an overall silver extraction of 95%.

## Example 2

A 100 g samle of the same calcine as in Example 1 was leached at 18% solids at pH 4.5 with a sulphuric acid solution containing 2 g/L thiourea for 30 min. at 40-70°C. At the end of the test, the combined filtrate and wash solution contained 90% of the silver.

## Example 3

A 60 g sample of the same calcine used in Example 1 was leached at 15% solids at pH 1.5 with spent electrolyte (60 g/L Zn, 180 g/L $H_2SO_4$) containing 20 g/L thiourea for 30 min. at 40-70°C. At the end of the test, the combined filtrate and wash solution contained 94% of the silver.

## Example 4

A 100 g sample of leach residue (20.9% Zn, 36.1% Fe, 7.5% Pb, 330 g/t Ag) prepared by leaching calcine at pH 1.5 was leached at 23% solids at pH 1.5 for 0.5 h at 40°C with an aqueous sulphuric acid solution containing 5 g/L thiourea. At the end of the test, the slurry was filtered and the combined filtrate and wash solution contained 95% of the silver contained in the feed.

## Example 5

A 20 g sample of a coconut activated carbon was soaked for 15 min. in 0.45 L of an aqueous solution containing 2 g/L thiourea. After 15 min., the carbon was filtered and calculated to contain 2% thiourea by weight based upon analysis of the filtrate. The thiourea-impregnated carbon was then added to a 100 g sample of calcine (65.8% Zn, 9.30% Fe, 64 g/t Ag) and leached for 30 min. at pH 1.5 and 75°C with spent electrolyte. At the end of the test, 87.6% of the silver was leached from the calcine and the carbon contained 280 g/t Ag or 98.1% of the solubilized silver giving an overall silver recovery of 86%.

## Example 6

A 5 g sample of activated carbon was soaked in 0.110 L of an aqueous solution containing 25 g/L thiourea for 30 min. The carbon was calculated to contain 20% thiourea by weight based upon analysis of the filtrate. The thiourea-impregnated carbon was then added to a 100 g sample of the same calcine as in Example 5 and leached for 30 min. at pH 1.5 at 75°C with spent electrolyte. At the end of the test, 88.8% of the silver was leached from the calcine and the carbon contained 1000 g/t Ag or 96.7% of the solubilized silver giving an overall silver recovery of 86%.

## Example 7

60 g of a coconut activated carbon was added to a beaker containing 1.2 L of leach solution assaying 56 mg/L Ag and 13.7 g/L thiourea at pH 1.5. The slurry was agitated at ambient temperature and after 1 h, the carbon assayed 1064 g/t Ag corresponding to an overall silver adsorption of 95%.

Although the invention has been disclosed with reference to preferred embodiments, it is to be understood that other alternatives are also envisaged and that the invention is limited by the scope of the claims only.

## Claims

1. A process for the recovery of silver from zinc calcines, or neutral or low acid leach residues, comprising the steps of:
   a) leaching a silver containing zinc calcine or a neutral or low acid leach residue at atmospheric pressure with an acidic aqueous sulphate solution containing from 0.1–20g/l thiourea without the addition of any organic, reducing or oxidizing reagents at 30–85°C and pH 1–5 to solubilize more than 85% of the silver; and
   b) recovering the solubilized silver by adsorption onto activated carbon, or an ion-exchange resin, or by cementation on iron or zinc dust.

2. A process as defined in claim 1, wherein recovery of the solubilized silver is done by adding carbon to the leach slurry to adsorb the silver and by screening the silver loaded carbon.

3. A process as defined in claim 1, wherein recovery of the solubilized silver is done by adsorption onto activated carbon or cementation with iron or zinc dust following solid-liquid separation of the leach slurry.

4. A process for the recovery of silver from zinc calcines, or neutral or low acid leach residues, comprising the steps of:
   a) reacting activated carbon with an aqueous thiourea solution;
   b) filtering the thiourea-impregnated carbon from the thiourea solution to form a thiourea-impregnated carbon containing 1–25% thiourea by weight;
   c) adding the thiourea-impregnated carbon to a silver containing zinc calcines or a neutral or low acid leach residue, and leaching with an acidic aqueous sulphate solution at 30–85°C and pH 1–5 to simultaneously solubilize and adsorb more than 85% of the silver onto the activated carbon; and
   d) screening the silver loaded carbon.

5. A process as defined in claim 1 or 4, in which the acidic sulphate solution is a diluted sulphuric acid solution, waste acidic electrolyte from electrowinning of recycled leach liquor

6. A process as defined in claim 4, in which the activated carbon is impregnated from 1–25% by weight with thiourea by reacting the carbon with a solution containing 1–30g/l thiourea for 10 minutes to 2 hours.

## Patentansprüche

1. Verfahren zum Gewinnen von Silber aus Röstblende oder aus Rückständen der neutralen oder schwach sauren Zinklaugung, bestehend aus den Stufen:
   a) Auslaugen einer silberhaltigen Röstblende oder eines neutralen oder schwach sauren Auslaugrückstandes bei atmosphärischem Druck mit einer sauren wässrigen Sulfatlösung, die 0,1 bis 20 g/l Thioharnstoff enthält, ohne Zugabe irgendwelcher organischer, reduzierender oder oxidierender Reagentien, bei 30 bis 85°C und pH 1 bis 5 zur Löslichmachung von mehr als 85% des Silbers; und
   b) Gewinnung des löslich gemachten Silbers durch Adsorption an Aktivkohle oder einem Ionenaustauscherharz oder durch Zementieren auf Eisen- oder Zinkstaub.

2. Verfahren nach Anspruch 1, dadurch gekennzeichnet, daß die Gewinnung des löslich gemachten Silbers durch Zugabe von Kohle zur Auslaugaufschlämmung erfolgt, um das Silber zu adsorbieren und durch Sieben der silberbeladenen Kohle.

3. Verfahren nach Anspruch 1, dadurch gekennzeichnet, daß die Gewinnung des löslich gemachten Silbers durch Adsorption auf Aktivkohle oder Zementieren mit Eisen- oder Zinkstaub gefolgt von Fest-Flüssig-Trennung der Auslaugaufschlämmung erfolgt.

4. Verfahren zur Gewinnung von Silber aus Röstblende oder aus Rückständen der neutralen oder schwach sauren Zinklaugung, umfassend die Stufen:
   a) Umsetzung von Aktivkohle mit einer wässrigen Thioharnstofflösung;
   b) Filtrieren der mit Thioharnstoff imprägnierten Kohle aus der Thioharnstofflösung zur Bildung von mit Thioharnstoff imprägnierter Kohle, die 1 bis 25 Gew.-% Thioharnstoff enthält;
   c) Zugabe der mit Thioharnstoff imprägnierten Kohle zu einer silberhaltigen Röstblende oder den Rückständen der neutralen oder schwach sauren Zinklaugung und Auslaugen mit einer sauren wässrigen Sulfatlösung bei 30 bis 85°C und pH 1 bis 5, um gleichzeitig mehr als 85% des Silbers löslich zu machen und auf der Aktivkohle zu adsorbieren; und
   d) Sieben der silberbeladenen Kohle.

5. Verfahren nach Anspruch 1 oder 4, dadurch gekennzeichnet, daß die saure Sulfatlösung eine verdünnte Schwefelsäurelösung, saurer Abfallelektrolyt von der Elektrogewinnung oder im Kreislauf zurückgeführte Auslaugflüssigkeit ist.

6. Verfahren nach Anspruch 4, dadurch gekennzeichnet, daß die Aktivkohle mit 1 bis 25 Gew.-% Thioharnstoff imprägniert wird, indem man die Kohle mit einer Lösung, die 1 bis 30g/l Thioharnstoff aufweist, für 10min bis 2h umsetzt.

## Revendications

1. Procédé d'isolement de l'argent de blende grillée ou de résidus de lixiviation neutre ou faiblement acide, comprenant les stades:
   a) de lixiviation d'une blende ou d'un résidu de lixiviation neutre ou faiblement acide contenant de l'argent sous la pression atmosphérique avec une solution aqueuse acide de sulfate contenant 0,1 à 20 g/litre de thiourée sans addition d'aucun réactant réducteur ou oxydant organique à 30–85°C et pH 1–5 pour solubiliser plus de 85% de l'argent; et
   b) d'isolement de l'argent solubilisé par adsorption sur du carbone activé ou une résine échangeuse d'ions, ou par cémentation sur du fer ou du zinc en poudre.

2. Procédé suivant la revendication 1, dans lequel l'isolement de l'argent solubilisé est effectué par addition de carbone à la dispersion de lixiviation aux fins d'adsorber l'argent et par filtration du carbone chargé d'argent.

3. Procédé suivant la revendication 1, dans lequel l'isolement de l'argent solubilisé est effectué par adsorption sur du carbone activé ou par cémentation avec du fer ou du zinc en poudre suivies d'une séparation solide/liquide de la dispersion de lixiviation.

4. Procédé d'isolement de l'argent de blende grillée ou de résidus de lixiviation neutre ou faiblement acide, comprenant les stades:
   a) de réaction du carbone activé avec une solution aqueuse de thiourée;
   b) de séparation du carbone imprégné de thiourée par filtration de la solution de thiourée pour former un carbone imprégné de thiourée contenant 1 à 25% en poids de thiourée;
   c) d'addition du carbone imprégné de thiourée à de la blende grillée ou un résidu de lixiviation neutre ou faiblement acide contenant de l'argent, et de lixiviation avec une solution aqueuse acide de sulfate à 30–85°C et pH 1–5 pour simultanément solubiliser et adsorber plus de 85% de l'argent sur le carbone activé; et
   d) de séparation par filtration du carbone chargé d'argent.

5. Procédé suivant la revendication 1 ou 4, dans lequel la solution acide de sulfate est une solution diluée d'acide sulfurique, de l'électrolyte acide usé provenant de l'électrodéposition ou de la liqueur de lixiviation recyclée.

6. Procédé suivant la revendication 4, dans lequel le carbone activé est imprégné de 1 à 25% en poids de thiourée par réaction du carbone, pendant 10 minutes à 2 heures, avec une solution contenant 1 à 30 g/litre de thiourée.

Fig.1

SPENT
ELECTROLYTE            Zn CALCINE

10 — NEUTRAL LEACH
pH 1-2

12 — THICKENER    → TO IRON
PRECIPITATION

TU → TU LEACH

14

16 — CARBON-IN-PULP

18 — CARBON SCREEN

TO
CONVERSION
OR HAL

Ag-LOADED CARBON
TO SILVER RECOVERY

## Fig. 2

Zn CALCINE

Zn CALCINE

SPENT
ELECTROLYTE

10a — NEUTRAL LEACH pH 1.5

NEUTRAL LEACH pH 3 — 10b

NEUTRAL LEACH pH 4 — 10c

THICKENER — 12

THICKENER — 20 → IMPURE SOLUTION

TU → TU LEACH — 14

LAL — 22 ← SPENT ELECTROLYTE

CARBON-IN-PULP — 16

THICKENER — 24

CARBON SCREEN — 18

CONVERSION OR HAL — 26 ← H₂SO₄ SPENT ELECTROLYTE

LOADED CARBON TO SILVER RECOVERY

ZnFe₂O₄ RESIDUE

EP 0 257 548 B1

Fig.3

EP 0 257 548 B1

Fig. 4